# EUROPÄISCHE PATENTSCHRIFT

(11) **EP 4 345 354 B1**
(45) Veröffentlichungstag und Bekanntmachung des Hinweises auf die Patenterteilung: **17.12.2025**
(21) Anmeldenummer: 23199214.0
(22) Anmeldetag: 22.09.2023
(51) Int. Cl.: F16L 37/098

(54) **STECKVERBINDER ZUM VERBINDEN VON LEITUNGEN FÜR FLÜSSIGE ODER GASFÖRMIGE MEDIEN, SOWIE EIN VERFAHREN ZUM HERSTELLEN EINER STECKVERBINDUNG ZWISCHEN DEM STECKVERBINDER UND EINEM GEGENSTECKVERBINDER**
CONNECTOR FOR CONNECTING LINES FOR LIQUID OR GASEOUS MEDIA AND METHOD FOR PRODUCING A PLUG CONNECTION BETWEEN THE CONNECTOR AND A MATING CONNECTOR
CONNECTEUR ENFICHABLE POUR LA CONNEXION DE CONDUITES POUR LIQUIDES OU GAZ AINSI QUE PROCÉDÉ DE FABRICATION D'UNE CONNEXION ENFICHABLE ENTRE LE CONNECTEUR ENFICHABLE ET UN CONNECTEUR COMPLÉMENTAIRE

(30) Priorität: 27.09.2022 AT 507392022
(43) Veröffentlichungstag der Anmeldung: 03.04.2024
(73) Patentinhaber: Henn GmbH & Co KG., 6850 Dornbirn (AT)
(72) Erfinder: HARTMANN, Harald, 6781 Bartholomäberg (AT)
(74) Vertreter: Burger, Hannes

(56) Entgegenhaltungen:
- EP-B1- 2 990 708
- DE-A1- 102016 001 610
- DE-C1- 3 815 172
- US-A1- 2007 120 362

## Beschreibung

Die Erfindung betrifft einen Steckverbinder zum Verbinden von Leitungen für flüssige oder gasförmige Medien, sowie ein Verfahren zum Herstellen einer Steckverbindung zwischen dem Steckverbinder und einem Gegensteckverbinder.

Aus der WO 2018/144902 A1, der WO 2018/102213 A1 und der EP 3 179 148 A1 sind diverse Steckverbinder bekannt. Die aus diesen Dokumenten bekannten Steckverbinder weisen den Nachteil auf, dass die Verbindung fehlerhaft sein kann bzw. nicht eindeutig festzustellen ist, ob die Steckverbinder richtig miteinander gefügt sind. Weitere Steckverbinder sind aus der US 2007/120362 A1, der EP 2 990 708 B1 und der DE 38 15 172 C1 bekannt.

Aufgabe der vorliegenden Erfindung war es, die Nachteile des Standes der Technik zu überwinden und einen Steckverbinder und ein Verfahren zum Herstellen einer Steckverbindung zwischen dem Steckverbinder und einem Gegensteckverbinder zur Verfügung zu stellen, welche eine verbesserte Verbindung zwischen dem Steckverbinder und dem Gegensteckverbinder ermöglicht.

Diese Aufgabe wird durch eine Vorrichtung und ein Verfahren gemäß den Ansprüchen gelöst.

Erfindungsgemäß ist ein Steckverbinder zum Verbinden von Leitungen für flüssige oder gasförmige Medien ausgebildet. Der Steckverbinder umfasst
- einen Verbinderkörper, welcher zumindest einen ersten Mantelabschnitt aufweist, wobei der erste Mantelabschnitt eine Mittelachse umgibt und einen Aufnahmeraum zur Aufnahme eines Teils eines Gegensteckverbinders bildet, wobei der Aufnahmeraum zur Aufnahme eines Teils eines Gegensteckverbinders an einer Einsteckseite offen ist, wobei im ersten Mantelabschnitt zumindest eine Durchtrittsöffnung ausgebildet ist;
- ein Arretierungselement, welches zum Sichern des Steckverbinders relativ zum Gegensteckverbinder vorgesehen ist.

Das Arretierungselement weist einen ersten Schenkel und einen damit gekoppelten zweiten Schenkel auf, wobei der zweite Schenkel des Arretierungselementes außerhalb des ersten Mantelabschnittes angeordnet ist und mit dem Verbinderkörper gekoppelt ist, wobei sich der zweite Schenkel in einer Längsrichtung parallel zur Mittelachse erstreckt, wobei der erste Schenkel im Bereich der Durchtrittsöffnung angeordnet ist und dazu ausgebildet ist,
in einer Arretierstellung durch die Durchtrittsöffnung radial in den Aufnahmeraum einzuragen, um eine formschlüssige Verbindung mit dem Gegensteckverbinder herstellen zu können und
in einer Freigabestellung radial aus dem Aufnahmeraum nach außen so weit zurückgezogen zu sein, um den Gegensteckverbinder zum Herausziehen aus dem Aufnahmeraum freizugeben.

Der erfindungsgemäße Steckverbinder bringt den Vorteil mit sich, dass eine sichere Verbindung mit dem Gegensteckverbinder hergestellt werden kann.

Weiters kann es zweckmäßig sein, wenn mehrere der Arretierungselemente über den Umfang verteilt am Verbinderkörper angeordnet sind, wobei für jedes der Arretierungselemente eine Durchtrittsöffnung ausgebildet ist. Dies bringt den Vorteil mit sich, dass durch diese Maßnahme eine erhöhte Haltekraft erreicht werden kann. Darüber hinaus kann durch das Aufteilen der Arretierungselemente über den Umfang eine symmetrische Haltekraft erreicht werden, sodass der Steckverbinder und der Gegensteckverbinder bei einem axialen Zug dieser beiden Elemente zueinander nicht verkippen.

Insbesondere kann vorgesehen sein, dass drei Arretierungselemente über den Umfang verteilt am Verbinderkörper angeordnet sind. Besonders mit drei Arretierungselementen lässt sich eine gute Verriegelung zwischen dem Steckverbinder und dem Gegensteckverbinder erreichen.

Ferner kann vorgesehen sein, dass eine Öffnerhülse ausgebildet ist, wobei die Öffnerhülse zwischen einer Offenstellung und einer Geschlossenstellung verdrehbar am Verbinderkörper angeordnet ist und wobei in der Offenstellung der Öffnerhülse der erste Schenkel des Arretierungselementes in die Freigabestellung gedrängt ist und in dieser gehalten wird und wobei in der Geschlossenstellung der Öffnerhülse der erste Schenkel des Arretierungselementes seine Arretierstellung einnimmt. Mittels der Öffnerhülse kann das Arretierungselement einfach in der Freigabestellung gehalten werden bzw. einfach von der Arretierstellung in die Freigabestellung überführt werden.

Darüber hinaus kann vorgesehen sein, dass die Öffnerhülse eine Kulissenführung aufweist, mittels welcher das Arretierungselement bei Verdrehung der Öffnerhülse in Radialrichtung verschiebbar ist, wobei der zweite Schenkel des Arretierungselementes in Axialrichtung durch die Kulissenführung hindurchgeführt ist. Besonders bei einer derartigen Ausbildung lässt sich das Arretierungselement einfach von der Arretierstellung in die Freigabestellung überführen.

Weiters ist es auch denkbar, dass das Arretierungselement mittels der Kulissenführung der Öffnerhülse radial gegen ein unerwünschtes Lösen gesichert werden kann.

Vorteilhaft ist auch eine Ausprägung, gemäß welcher vorgesehen sein kann, dass in der Kulissenführung ein Anhebeelement mit einer Anhebefläche ausgebildet ist, wobei die Anhebefläche in Richtung einer ersten Umfangsrichtung einen sich vergrößernden Abstand zur Mittelachse aufweist und wobei in der Offenstellung der Öffnerhülse eine Innenseite des zweiten Schenkels des Arretierungselementes an der Anhebefläche anliegt. Besonders bei einer derartigen Ausführung lässt sich das Arretierungselement einfach bewegen.

Gemäß einer Weiterbildung ist es möglich, dass in der Kulissenführung ein Sicherungselement mit einer Sicherungsfläche ausgebildet ist, wobei die Sicherungsfläche in Richtung der ersten Umfangsrichtung einen sich verringernden Abstand zur Mittelachse aufweist und wobei in der Geschlossenstellung der Öffnerhülse eine Außenseite des zweiten Schenkels des Arretierungselementes von der Sicherungsfläche überdeckt ist. Dies bringt den Vorteil mit sich, dass durch diese Maßnahme das Arretierungselement in seiner Arretierstellung gesichert werden kann. Dadurch kann die Gefahr eines unbeabsichtigten Lösens des Gegensteckverbinders vom Steckverbinder, beispielsweise durch Erschütterung, vermindert werden.

Ferner kann es zweckmäßig sein, wenn ein Federelement ausgebildet ist, welches auf die Öffnerhülse wirkt, wobei die Öffnerhülse mittels des Federelementes in die Geschlossenstellung gedrängt ist. Dies bringt den Vorteil mit sich, dass die Öffnerhülse bei entsprechender Freigabe selbstständig und automatisiert in die Geschlossenstellung übergeführt werden kann.

Insbesondere kann vorgesehen sein, dass das Federelement als U-förmiger Bügel mit einem ersten Federelementschenkel und einem zweiten Federelementschenkel ausgebildet ist, wobei der erste Federelementschenkel mit dem Verbinderkörper gekoppelt ist und wobei der zweite Federelementschenkel mit der Öffnerhülse gekoppelt ist. Der erste Federelementschenkel und der zweite Federelementschenkel sind federelastisch zueinander ausgebildet.

Darüber hinaus kann vorgesehen sein, dass an der Öffnerhülse eine Verdrehsicherung ausgebildet ist, wobei mittels der Verdrehsicherung die Öffnerhülse in der Offenstellung gehalten werden kann. Dies bringt den Vorteil mit sich, dass durch diese Maßnahme der Steckverbinder zum Stecken mit dem Gegensteckverbinder vorbereitet sein kann, wobei eine nur geringe Steckkraft notwendig ist, um den Gegensteckverbinder korrekt in den Steckverbinder einstecken zu können und eine korrekte Steckverbindung zwischen den Steckverbinder und dem Gegensteckverbinder herstellen zu können.

Weiters kann vorgesehen sein, dass die Verdrehsicherung einen Rastarm aufweist, der in einer Rastarmdurchtrittsöffnung des ersten Mantelabschnittes radial in den Aufnahmeraum einragt, wobei die Rastarmdurchtrittsöffnung einen sich in Umfangsrichtung erstreckenden Schlitz und daran anschließend eine sich zur Einsteckseite hin erstreckende axiale Abstufung aufweist, wobei der Rastarm in der Offenstellung der Öffnerhülse in der axialen Abstufung aufgenommen ist und wobei der Rastarm durch einen eingesteckten Gegensteckverbinder aus der axialen Abstufung in den Schlitz verschiebbar ist. Eine derartige Verdrehsicherung kann einfach hergestellt werden. Darüber hinaus kann eine derartige Verdrehsicherung eine robuste Bauweise aufweisen und somit einerseits wenig fehleranfällig sein und darüber hinaus eine große Langlebigkeit aufweisen.

Gemäß einer besonderen Ausprägung ist es möglich, dass in der Öffnerhülse ein Sichtfenster angeordnet ist und dass am Verbinderkörper ein Anzeigeelement angeordnet ist, wobei das Anzeigeelement durch das Sichtfenster hindurch sichtbar ist, wenn sich die Öffnerhülse in der Geschlossenstellung befindet und das Anzeigeelement durch die Öffnerhülse verdeckt ist, wenn sich die Öffnerhülse in der Offenstellung befindet. Durch diese Maßnahme kann eine Anzeige erreicht werden, um anzeigen zu können, ob der Steckverbinder und der Gegensteckverbinder korrekt miteinander gefügt sind.

Mit gleicher Wirkung kann vorgesehen sein, dass über der Öffnerhülse ein weiterer Hülsenabschnitt angeordnet ist, der mit dem Verbinderkörper gekoppelt ist und dass ein an der Öffnerhülse angeordnetes Anzeigeelement in der Offenstellung der Öffnerhülse vom Hülsenabschnitt verdeckt ist.

Das Anzeigeelement kann beispielsweise eine Beschriftung "Geschlossen" bzw. "OK" aufweisen. Ferner kann es zweckmäßig sein, wenn das Anzeigeelement eine Codierungsfläche aufweist, welche einen maschinenlesbaren Code, wie etwa einen Data Matrix Code, einen QR-Code oder einen Strichcode aufweist. Durch diese Maßnahme kann erreicht werden, dass nicht nur eine optische Kontrolle der korrekten Positionierung durch den Maschinenbediener erfolgen kann, sondern dass auch eine maschinenlesbare Kontrolle erfolgen kann bzw. dass die Information entsprechend abgespeichert werden kann.

Weiters ist es auch denkbar, dass die Information der maschinenlesbaren Kontrolle abgespeichert wird, und dazu genutzt wird, um weitere Fertigungsschritte freizugeben bzw. diese zu verhindern. Somit kann erreicht werden, dass ein Bedienerfehler weitestgehend ausgeschlossen werden kann.

Insbesondere kann es vorteilhaft sein, wenn das Anzeigeelement zumindest bereichsweise in einer entsprechenden Signalfarbe, wie etwa grün ausgebildet ist und/oder dass an der Anzeigefläche ein Schriftzug, wie etwa "OK" angeordnet ist. Durch diese Maßnahme kann erreicht werden, dass auch nicht fachkundige bzw. nicht geschulte Personen eine korrekte Arretierung des Arretierungselementes bzw. eine korrekte Fügung des Gegensteckverbinders mit dem Steckverbinder visuell erkannt werden kann.

Alternativ zur oder zusätzlich zur obigen Ausführung des Sichtfensters in der Öffnerhülse, kann vorgesehen sein, dass außerhalb der Öffnerhülse eine Anzeigehülse oder ein Anzeigehülsenabschnitt ausgebildet ist, wobei die Anzeigehülse oder der Anzeigehülsenabschnitt starr mit dem Verbinderkörper gekoppelt ist. Hierbei kann vorgesehen sein, dass an einer Außenmantelfläche der Öffnerhülse das Anzeigeelement angeordnet ist. Die Anzeigehülse oder der Anzeigehülsenabschnitt können dazu ausgebildet sein, das Anzeigeelement zu verdecken wenn sich die Öffnerhülse in der Offenstellung befindet.

Weiters kann vorgesehen sein, dass am Verbinderkörper ein weiteres Anzeigeelement angeordnet ist, wobei das weitere Anzeigeelement durch das Sichtfenster hindurch sichtbar ist, wenn sich die Öffnerhülse in der Offenstellung befindet und das weitere Anzeigeelement durch die Öffnerhülse verdeckt ist, wenn sich die Öffnerhülse in der Geschlossenstellung befindet. Das weitere Anzeigeelement kann beispielsweise eine Beschriftung "Offen" bzw. eine rote Farbe sein.

Alternativ zur obigen Ausführung des Sichtfensters in der Öffnerhülse, kann vorgesehen sein, dass außerhalb der Öffnerhülse eine Anzeigehülse oder ein Anzeigehülsenabschnitt ausgebildet ist, wobei die Anzeigehülse oder der Anzeigehülsenabschnitt starr mit dem Verbinderkörper gekoppelt ist. Hierbei kann vorgesehen sein, dass an einer Außenmantelfläche der Öffnerhülse das weitere Anzeigeelement angeordnet ist. Die Anzeigehülse oder der Anzeigehülsenabschnitt können dazu ausgebildet sein, das weitere Anzeigeelement zu verdecken, wenn sich die Öffnerhülse in der Geschlossenstellung befindet.

Entsprechend einer vorteilhaften Weiterbildung kann vorgesehen sein, dass der Verbinderkörper eine Steckerhülse und ein Anschlussstück umfasst, welche Starr miteinander gekoppelt sind, wobei der erste Mantelabschnitt und der Aufnahmeraum in der Steckerhülse ausgebildet sind. Besonders ein derart ausgebildeter Verbinderkörper kann einen einfach herzustellenden und robusten Aufbau aufweisen.

Die Steckerhülse und das Anschlussstück können durch eine formschlüssige Verbindung miteinander gekoppelt sein. Insbesondere kann vorgesehen sein, dass die Steckerhülse derart in eine Ausnehmung des Anschlussstückes hinein verformt ist, dass die formschlüssige Verbindung zwischen der Steckerhülse und dem Anschlussstück hergestellt ist.

Weiters ist vorgesehen, dass die Steckerhülse als Blechumformteil, insbesondere aus einem Stahlblech, ausgebildet ist und dass das Arretierungselement als Blechumformteil, insbesondere aus einem federelastischen Stahlblech, ausgebildet ist, wobei in der Steckerhülse eine Arretierungselementaufnahme ausgebildet ist und der zweite Schenkel des Arretierungselementes formschlüssig und starr in der Arretierungselementaufnahme aufgenommen ist. Durch diese Maßnahme kann eine einfache Aufnahme des Arretierungselementes an der Steckerhülse erreicht werden.

Weiters kann vorgesehen sein, dass das Anschlussstück als Spritzgussteil, insbesondere aus einem Kunststoffwerkstoff gebildet ist.

Weiters kann vorgesehen sein, dass das Arretierungselement aus einem federelastischen Stahl gebildet ist, wobei das Arretierungselement in einem unbelasteten Zustand die Arretierstellung einnimmt und durch die Öffnerhülse entgegen der Federelastizität in die Freigabestellung gedrängt werden kann.

In einer alternativen Ausführungsvariante kann auch vorgesehen sein, dass das Arretierungselement mittels einer gelenkigen Aufnahme an der Steckerhülse aufgenommen ist, wobei ein Federelement vorgesehen ist, mittels welchem das Arretierungselement im unbelasteten Zustand in die Arretierstellung vorgespannt ist.

Ferner kann vorgesehen sein, dass das Arretierungselement als Blechumformteil ausgebildet ist, wobei der erste Schenkel in einem Schenkelwinkel zwischen 87° und 93° zum zweiten Schenkel angeordnet ist. Besonders ein derart ausgebildetes Arretierungselementes ist einfach herzustellen.

Erfindungsgemäß ist eine Steckerbaugruppe ausgebildet. Die Steckerbaugruppe umfasst einen Steckverbinder und einen Gegensteckverbinder. Der Steckverbinder ist nach einer der obigen Ausprägungen ausgebildet. Weiters weist der Gegensteckverbinder ein Formelement zum Herstellen einer formschlüssigen Verbindung mit dem ersten Schenkel des Arretierungselementes auf.

Erfindungsgemäß ist ein Verfahren zum Herstellen einer Steckverbindung zwischen einem Steckverbinder zum Verbinden von Leitungen für flüssige oder gasförmige Medien und einem Gegensteckverbinder, umfassend die Verfahrensschritte:
- bereitstellen des Steckverbinders mit einem Verbinderkörper, welcher zumindest einen ersten Mantelabschnitt aufweist, wobei der erste Mantelabschnitt eine Mittelachse umgibt und einen Aufnahmeraum zur Aufnahme eines Teils eines Gegensteckverbinders bildet, wobei der Aufnahmeraum zur Aufnahme eines Teils eines Gegensteckverbinders an einer Einsteckseite offen ist, wobei im ersten Mantelabschnitt zumindest eine Durchtrittsöffnung ausgebildet ist und einem Arretierungselement, welches zum Sichern des Steckverbinders relativ zum Gegensteckverbinder vorgesehen ist;
- bereitstellen des Gegensteckverbinders;
- einstecken des Gegensteckverbinders in den Aufnahmeraum des Steckverbinders;
- sichern des Gegensteckverbinders im Aufnahmeraum des Steckverbinders mittels des Arretierungselementes.

Das Arretierungselement weist einen ersten Schenkel und einen damit gekoppelten zweiten Schenkel auf, wobei der zweite Schenkel des Arretierungselementes außerhalb des ersten Mantelabschnittes angeordnet ist und mit dem Verbinderkörper gekoppelt ist, wobei sich der zweite Schenkel in einer Längsrichtung parallel zur Mittelachse erstreckt, wobei der erste Schenkel im Bereich der Durchtrittsöffnung angeordnet ist und dazu ausgebildet ist,
in einer Arretierstellung durch die Durchtrittsöffnung radial in den Aufnahmeraum einzuragen, um eine formschlüssige Verbindung mit dem Gegensteckverbinder herstellen zu können und
in einer Freigabestellung radial aus dem Aufnahmeraum nach außen so weit zurückgezogen zu sein, um den Gegensteckverbinder zum Herausziehen aus dem Aufnahmeraum freizugeben,
wobei zum Sichern des Gegensteckverbinders, das Arretierungselement von der Freigabestellung in die Arretierstellung überführt wird.

Das erfindungsgemäße Verfahren bringt den Vorteil mit sich, dass eine sichere Verbindung mit dem Gegensteckverbinder hergestellt werden kann.

Gemäß einer Weiterbildung ist es möglich, dass das Arretierungselement mittels einer Öffnerhülse in der Freigabestellung gehalten wird, wenn sich die Öffnerhülse in der Offenstellung befindet, wobei die Öffnerhülse mittels einer Verdrehsicherung in der Offenstellung gehalten wird, wobei beim Einstecken des Gegensteckverbinders in den Aufnahmeraum, die Verdrehsicherung durch den Gegensteckverbinder entriegelt wird und dadurch die Öffnerhülse unter der Kraft eines Federelementes in die Geschlossenstellung überführt wird, wodurch das Arretierungselement in die Arretierstellung überführt wird.

Ferner kann es zweckmäßig sein, wenn zum Entsichern des Gegensteckverbinders die Öffnerhülse manuell entgegen der Kraft des Federelementes von der Geschlossenstellung in die Offenstellung verdreht wird, wobei das Arretierungselement durch eine Kulissenführung von der Arretierstellung in die Freigabestellung überführt wird.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Explosionsansicht der einzelnen Bauteile einer ersten Ausführungsform Steckerbaugruppe;
- Fig. 2: eine perspektivische Ansicht einer ersten Ausführungsform eines Steckverbinders mit einem darin eingesteckten Gegensteckverbinder, wobei sich eine Öffnerhülse in einer Geschlossenstellung befindet;
- Fig. 3: eine perspektivische Ansicht des Steckverbinders, wobei sich die Öffnerhülse in einer Offenstellung befindet;
- Fig. 4: eine erste Detailansicht eines Längsschnittes des Steckverbinders;
- Fig. 5: eine zweite Detailansicht eines Längsschnittes des Steckverbinders;
- Fig. 6: eine perspektivische Ansicht einer zweiten Ausführungsform des Steckverbinders mit einem darin eingesteckten Gegensteckverbinder, wobei sich eine Öffnerhülse in einer Geschlossenstellung befindet und wobei ein Anzeigehülsenabschnitt ausgebildet ist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

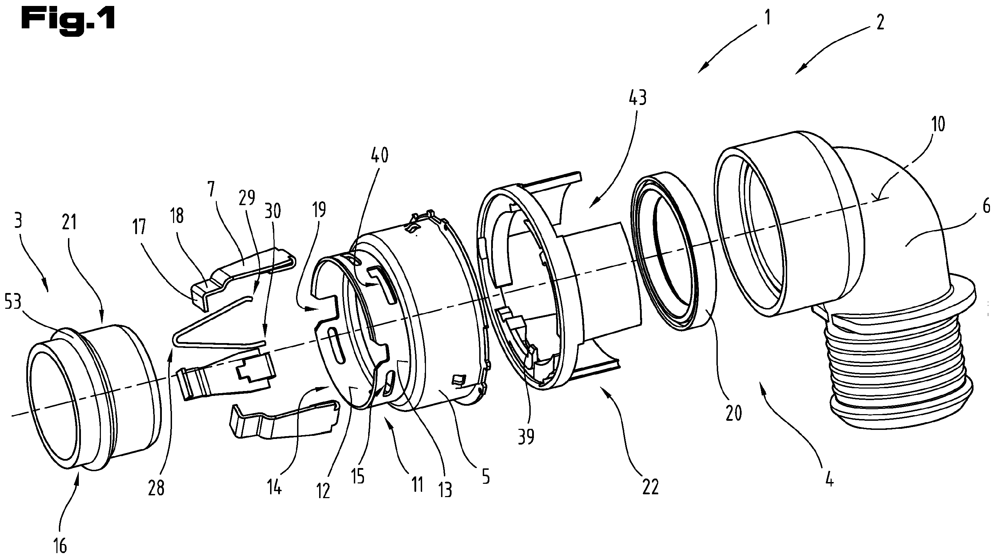

Fig. 1 zeigt eine perspektivische Explosionsansicht der einzelnen Bauteile einer Steckerbaugruppe 1. Die Steckerbaugruppe 1 umfasst einen Steckverbinder 2 und einen Gegensteckverbinder 3. Der Steckverbinder 2 und der Gegensteckverbinder 3 sind als Koppelelemente zur lösbaren Kopplung von Leitungsbauteilen ausgebildet. Die Leitungsbauteile können zur Medienführung dienen. Insbesondere können die Leitungsbauteile zur Führung eines Fluids, insbesondere eines Gases oder einer Flüssigkeit dienen.

In der Ansicht nach Fig. 1 ist der Gegensteckverbinder 3 nicht in den Steckverbinder 2 eingesteckt. Der Übersichtlichkeit halber ist der Steckverbinder 2 in einer Explosionsansicht dargestellt, sodass die einzelnen Bauteile des Steckverbinders 2 sichtbar sind.

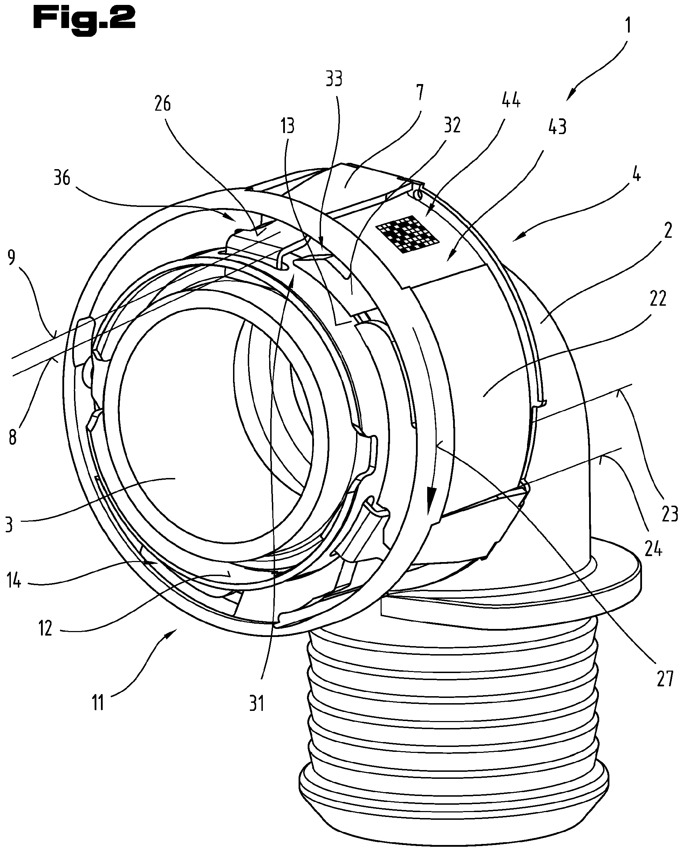

In der Fig. 2 ist die Steckerbaugruppe 1 im zusammengebauten Zustand dargestellt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

In der Darstellung nach Fig. 2 sind der Steckverbinder 2 und der Gegensteckverbinder 3 ineinander gesteckt dargestellt.

Der Steckverbinder 2 und der Gegensteckverbinder 3 können jeweils an ein Leitungselement gekoppelt sein, wobei die Leitungselemente nicht dargestellt sind. Die Leitungselement können beispielsweise in Form von Rohren ausgebildet sein. Das Leitungselement kann beispielsweise ein starres Element, wie etwa ein Kunststoffrohr sein. In einer andern Ausführungsvariante kann das Leitungselement als flexible Leitung aus einem Gummiwerkstoff ausgebildet sein.

Der Steckverbinder 2 umfasst einen Verbinderkörper 4. Wie aus Fig. 1 ersichtlich, kann der Verbinderkörper 4 eine Steckerhülse 5 und ein Anschlussstück 6 umfassen. Die Steckerhülse 5 und das Anschlussstück 6 können starr miteinander gekoppelt sein.

In einer ersten Ausführungsvariante kann vorgesehen sein, dass das Anschlussstück 6 als Spritzgussteil, insbesondere aus einem Kunststoffwerkstoff gebildet ist. Die Steckerhülse 5 kann aus einem Metallwerkstoff, insbesondere als Blechumformteil, gebildet sein.

Wie aus den Figuren 1 und 2 weiters ersichtlich, kann vorgesehen sein, dass über den Umfang verteilt mehrere Arretierungselemente 7 angeordnet sind, welche zum Sichern des Steckverbinders 2 und des Gegensteckverbinders 3 zueinander ausgebildet sind. Im dargestellten Ausführungsbeispiel sind drei der Arretierungselemente 7 in einem regelmäßigen Abstand um den Umfang verteilt angeordnet.

Das Arretierungselement 7 ist derart konstruiert, dass es leicht aktiviert und deaktiviert werden kann, sodass der Steckverbinder 2 und der Gegensteckverbinder 3 bedarfsweise voneinander getrennt bzw. miteinander verbunden werden können.

Das Arretierungselement 7 kann in eine Arretierstellung 8 gebracht werden, in welcher der Steckverbinder 2 und der Gegensteckverbinder 3 zueinander gesichert sind.

Weiters kann das Arretierungselement 7 in eine Freigabestellung 9 gebracht werden, in welcher der Gegensteckverbinder 3 in den Steckverbinder 2 eingesetzt oder aus diesem herausgenommen werden kann.

Insbesondere kann vorgesehen sein, dass das Arretierungselement 7 in Form eines Federelementes ausgebildet ist. Hierbei kann die Federsteifigkeit des Arretierungselementes 7 dazu genutzt werden, um das Arretierungselement 7 zwischen der Arretierstellung 8 und der Freigabestellung 9 bewegen zu können.

Wie aus Fig. 1 ersichtlich, kann vorgesehen sein, dass der Gegensteckverbinder 3 entlang einer Mittelachse 10 des Steckverbinders 2 axial verschoben werden kann, um den Gegensteckverbinder 3 in den Steckverbinder 2 einzustecken.

Wie in Fig. 1 weiters ersichtlich, kann vorgesehen sein, dass am Verbinderkörper 4 ein erster Mantelabschnitt 11 ausgebildet ist, welcher die Mittelachse 10 des Steckverbinders 2 hülsenförmig umgibt. Im dargestellten Ausführungsbeispiel kann vorgesehen sein, dass der erste Mantelabschnitt 11 in der Steckerhülse 5 ausgebildet ist.

Der erste Mantelabschnitt 11 kann eine innenliegende Mantelfläche 12 und eine außenliegende Mantelfläche 13 aufweisen.

Im Bereich des ersten Mantelabschnittes 11 weist der Steckverbinder 2 einen Aufnahmeraum 14 auf. Der Aufnahmeraum 14 kann vom ersten Mantelabschnitt 11 umgeben sein und zur Aufnahme eines Teils des Gegensteckverbinders 3 dienen.

Der Verbinderkörper 4 kann je Arretierungselement 7 eine Durchtrittsöffnung 15 aufweisen, welche den ersten Mantelabschnitt 11 durchdringt. Im vorliegenden Ausführungsbeispiel können somit drei Durchtrittsöffnungen 15 ausgebildet sein. In der Arretierstellung 8 des Arretierungselementes 7, welche dieses im eingesteckten und verrasteten Zustand einnimmt, ragt das Arretierungselement 7 durch die jeweilige Durchtrittsöffnung 15 in den Aufnahmeraum 14. Hierbei wirkt das Arretierungselement 7 mit einer Sicherungsform 16 des Gegensteckverbinders 3 zusammen. Insbesondere ragt in der Arretierstellung 8 des Arretierungselementes 7 das Arretierungselement 7 durch die Durchtrittsöffnungen 15 hindurch in die Sicherungsform 16 des Gegensteckverbinders 3 hinein. Sie Sicherungsform 16 kann hierbei, wie aus dem vorliegenden Ausführungsbeispiel ersichtlich, in Form einer Erhebung ausgebildet sein. Alternativ kann die Sicherungsform 16 auch in Form einer Vertiefung, beispielsweise in Form einer Nut, ausgebildet sein.

Darüber hinaus kann vorgesehen sein, dass das Arretierungselement 7 einen ersten Schenkel 17 und einen zweiten Schenkel 18 aufweist. Der zweite Schenkel 18 des Arretierungselementes 7 kann außerhalb des ersten Mantelabschnittes 11 angeordnet sein und mit dem Verbinderkörper 4 gekoppelt sein. Wenn sich das Arretierungselement 7 in seiner Arretierstellung 8 befindet, ragen die ersten Schenkel 17 in den Aufnahmeraum 14 ein und der in den Steckverbinder 2 eingesteckte Gegensteckverbinder 3 ist relativ zum Steckverbinder 2 axial gesichert. Insbesondere ist der Steckverbinder 2 hierbei von einer Einsteckseite 19 her in den Gegensteckverbinder 3 eingesteckt.

Insbesondere ist hierbei vorgesehen, dass im arretierten Zustand der erste Schenkel 17 des Arretierungselementes 7 durch die Durchtrittsöffnung 15 hindurch in die Sicherungsform 16 des Gegensteckverbinders 3 hineinragt, um mit dieser eine formschlüssige Verbindung zu bilden. Wenn sich das Arretierungselement 7 in seiner Freigabestellung 9 befindet, ragt der erste Schenkel 17 nicht in den Aufnahmeraum 14 ein und der Gegensteckverbinder 3 ist relativ zum Steckverbinder 2 aus diesem herausziehbar.

Wie aus Fig. 1 weiters ersichtlich, kann vorgesehen sein, dass der Steckverbinder 2 ein Dichtungselement 20 umfasst. Das Dichtungselement 20 kann hierbei im Verbinderkörper 4 angeordnet sein. Insbesondere kann vorgesehen sein, dass das Dichtungselement 20 im Anschlussstück 6 aufgenommen ist und durch die Steckerhülse 5 und das Anschlussstück 6 begrenzt wird. Das Dichtungselement 20 kann im gesteckten Zustand der Steckerbaugruppe 1 mit dem Gegensteckverbinder 3, insbesondere mit einem Einsteckabschnitt 21 am Gegensteckverbinder 3 zusammenwirken. Insbesondere kann hierbei vorgesehen sein, dass das Dichtungselement 20 am Einsteckabschnitt 21 des Gegensteckverbinders 3 anliegt und somit eine dichte Verbindung zwischen dem Steckverbinder 2 und dem Gegensteckverbinder 3 hergestellt werden kann.

Wie aus den Fig. 1 und 2 weiters ersichtlich, kann vorgesehen sein, dass der Steckverbinder 2 eine Öffnerhülse 22 umfasst. Die Öffnerhülse 22 kann zum Überführen der Arretierungselemente 7 von der Arretierstellung 8 in die Freigabestellung 9 dienen. Insbesondere kann vorgesehen sein, dass die Öffnerhülse 22 zwischen einer Offenstellung 23 und einer Geschlossenstellung 24 um die Mittelachse 10 verdrehbar am Verbinderkörper 4 angeordnet ist bzw. mit diesem gekoppelt ist.

In der Darstellung nach Fig. 2 ist der Gegensteckverbinder 3 fest mit dem Steckverbinder 2 arretiert und die Öffnerhülse 22 befindet sich in ihrer Geschlossenstellung 24. Die Arretierungselemente 7 befinden sich hierbei in ihrer Arretierstellung 8. Um den Gegensteckverbinder 3 vom Steckverbinder 2 herausziehen zu können, müssen die Arretierungselemente 7 in ihre Freigabestellung 9 überführt werden. Dies kann dadurch erreicht werden, dass die Öffnerhülse 22 entgegen einer ersten Umfangsrichtung 27 von der Geschlossenstellung 24 in die Offenstellung 23 verdreht wird.

Wie aus Fig 1 weiters ersichtlich, kann vorgesehen sein, dass ein Federelement 28 ausgebildet ist, welches derart zwischen dem Verbinderkörper 4 und der Öffnerhülse 22 gekoppelt ist, dass die Öffnerhülse 22 in einem Zustand ohne externe Krafteinwirkung in ihre Geschlossenstellung 24 gedrängt bzw. vorgespannt ist.

Insbesondere kann vorgesehen sein, dass das Federelement als U-förmiger Bügel ausgebildet ist, welcher einen ersten Federelementschenkel 29 und einen zweiten Federelementschenkel 30 aufweist. Der erste Federelementschenkel 29 kann hierbei mit dem Verbinderkörper 4 gekoppelt sein. Der zweite Federelementschenkel 30 kann mit der Öffnerhülse 22 gekoppelt sein. Bei einer Verdrehung der Öffnerhülse 22 entgegen der ersten Umfangsrichtung 27 von der Geschlossenstellung 24 in die Offenstellung 23 können der erste Federelementschenkel 29 und der zweite Federelementschenkel 30 relativ zueinander verformt werden, insbesondere der erste Federelementschenkel 29 und der zweite Federelementschenkel 30 aufeinander zu gebogen werden.

Insbesondere kann vorgesehen sein, dass das Federelement 28 vorgespannt im Steckverbinder 2 verbaut ist, sodass, wenn sich die Öffnerhülse 22 in ihrer Geschlossenstellung 24 befindet, bereits ein Drehmoment bzw. eine Kraft auf die Öffnerhülse 22 wirkt, welche die Öffnerhülse 22 in ihre Offenstellung 23 drängt. Wenn nun die Öffnerhülse 22 entgegen der Kraft des Federelements 28 von ihrer Offenstellung 23 in die Geschlossenstellung 24 verdreht wird, so erhöht sich durch diese Bewegung die Spannung des Federelementes 28, wodurch das auf die Öffnerhülse 22 wirkende Drehmoment erhöht werden kann.

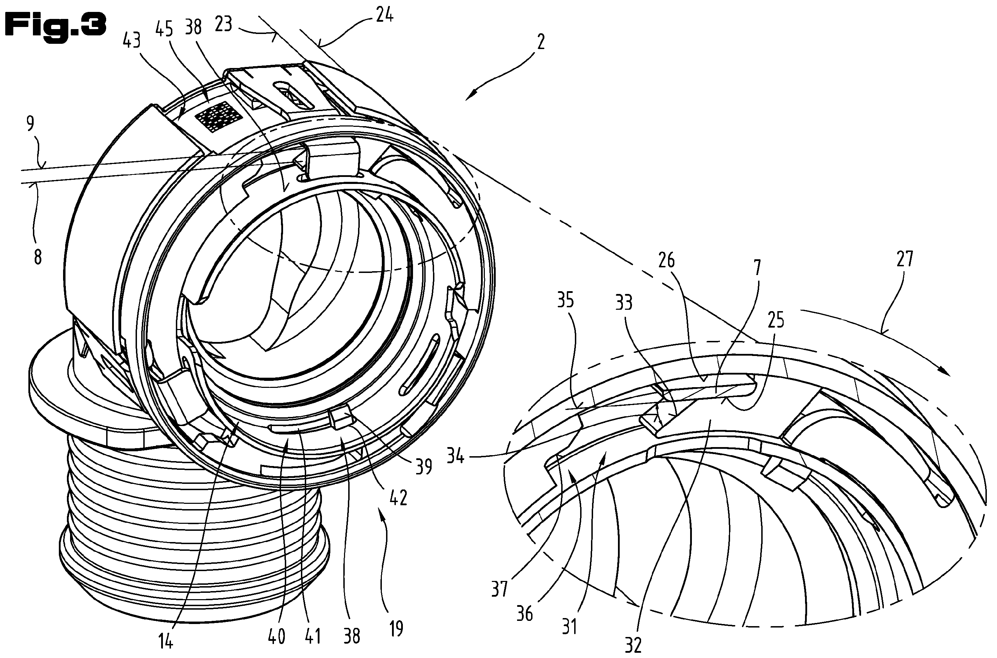

Fig. 3 zeigt das erste Ausführungsbeispiel des Steckverbinders 2 in einer perspektivischen Ansicht, wobei wiederum für gleiche Teile gleiche Bezugszeichen bzw. Bauteilbezeichnungen wie in den vorangegangenen Figuren 1 bis 2 verwendet werden. Um unnötige Wiederholungen zu vermeiden, wird auf die detaillierte Beschreibung in den vorangegangenen Figuren 1 bis 2 hingewiesen bzw. Bezug genommen.

In der Darstellung nach Fig. 3 befinden sich die Arretierungselemente 7 in ihrer Freigabestellung 9. In Fig. 3 ist weiters eine Detailansicht dargestellt, in welchem das Arretierungselement 7 zur besseren Darstellung teilweise geschnitten dargestellt ist.

Wie aus einer Zusammenschau der Fig. 2 und 3 gut ersichtlich, kann vorgesehen sein, dass eine Kulissenführung 31 ausgebildet ist, welche zum Überführen des Arretierungselementes 7 zwischen der Arretierstellung 8 und der Freigabestellung 9 dient. Dies kann durch eine Verdrehung der Öffnerhülse 22 zwischen der Geschlossenstellung 24 und der Offenstellung 23 erreicht werden. Die Arretierstellung 8 des Arretierungselementes 7 korrespondiert dabei mit der Geschlossenstellung 24 der Öffnerhülse 22. Die Freigabestellung 9 des Arretierungselementes 7 korrespondiert dabei mit der Offenstellung 23 der Öffnerhülse 22.

Wie besonders gut aus Fig. 3 ersichtlich, kann vorgesehen sein, dass die Kulissenführung 31 ein Anhebeelement 32 umfasst, welches zum Anheben der Arretierungselemente 7 dient. Insbesondere kann vorgesehen sein, dass das Anhebeelement 32 eine Anhebefläche 33 aufweist. Die Anhebefläche 33 kann in einem Winkel 34 zu einer Tangente 35 angeordnet sein. Durch die Anordnung der Anhebefläche 33 im Winkel 34 kann eine Umwandlung der Drehbewegung der Öffnerhülse 22 in eine radiale Bewegung des ersten Schenkels 17 des Arretierungselementes 7 in eine Radialbewegung erfolgen. Mit anderen Worten ausgedrückt, kann die Anhebefläche 33 in Richtung der ersten Umfangsrichtung 27 einen sich vergrößernden Abstand zur Mittelachse 10 aufweisen. Insbesondere kann vorgesehen sein, dass in der Offenstellung 23 der Öffnerhülse 22 eine Innenseite 25 des zweiten Schenkels 18 des Arretierungselementes 7 an der Anhebefläche 33 anliegt und somit das Arretierungselement 7 in der Freigabestellung 9 gehalten wird.

Wie besonders gut aus Fig. 3 ersichtlich, kann darüber hinaus vorgesehen sein, dass die Kulissenführung 31 ein Sicherungselement 36 umfasst, wobei das Sicherungselement 36 zum Sichern des Arretierungselementes 7 in der Arretierstellung 8 dient. Das Sicherungselement 36 kann eine Sicherungsfläche 37 aufweisen, wobei die Sicherungsfläche 37 derart positioniert ist, dass diese in der Geschlossenstellung 24 der Öffnerhülse 22 die Außenseite 26 des zweiten Schenkels 18 des Arretierungselementes 7 überlagert, sodass das Arretierungselement 7 sich nicht in Radialrichtung nach außen bewegen kann.

Wie aus Fig. 3 weiters ersichtlich, kann vorgesehen sein, dass eine Verdrehsicherung 38 ausgebildet ist, wobei mittels der Verdrehsicherung 38 die Öffnerhülse 22 entgegen der Federkraft des Federelementes 28 in ihrer Offenstellung 23 gehalten werden kann.

Insbesondere kann vorgesehen sein, dass die Verdrehsicherung 38 einen Rastarm 39 aufweist, welcher durch eine Rastarmdurchtrittsöffnung 40 in den Aufnahmeraum 14 des Verbinderkörpers 4 einragen kann. Der Rastarm 39 kann hierbei an der Öffnerhülse 22 ausgebildet sein bzw. mit dieser gekoppelt sein. Weiters kann vorgesehen sein, dass die Rastarmdurchtrittsöffnung 40 einen sich in Umfangsrichtung erstreckenden Schlitz 41 und an einem Ende des Schlitzes 41 eine axiale Abstufung 42 aufweist. Die axiale Abstufung 42 kann sich hierbei ausgehend vom Schlitz 41 in Axialrichtung zur Einsteckseite 19 des Verbinderkörpers 4 hin erstrecken.

Wie aus Fig. 3 weiters ersichtlich, kann vorgesehen sein, dass in der Offenstellung 23 der Öffnerhülse 22 der Rastarm 39 in der axialen Abstufung 42 aufgenommen ist, wodurch die Öffnerhülse 22 gegen ein Verdrehen in die Geschlossenstellung 24 gesichert ist.

Wie aus Fig. 2 weiters ersichtlich, kann vorgesehen sein, dass in der Öffnerhülse 22 ein Sichtfenster 43 ausgebildet ist, wobei durch das Sichtfenster 43 hindurch der Verbinderkörper 4, insbesondere die Steckerhülse 5 des Verbinderkörpers 4 hindurch sichtbar ist. Insbesondere kann hierbei vorgesehen sein, dass am Verbinderkörper 4 ein Anzeigeelement 44 angeordnet ist, wobei das Anzeigeelement 44 an von außen durch das Sichtfenster 43 hindurch sichtbar sein kann, wenn sich die Öffnerhülse in der Geschlossenstellung 24 befindet. Weiters kann das Anzeigeelement 44 durch die Öffnerhülse 22 verdeckt sein, wenn sich die Öffnerhülse 22 in der Offenstellung 23 befindet.

Wie aus Fig. 3 ersichtlich, kann vorgesehen sein, dass am Verbinderkörper 4 ein weiteres Anzeigeelement 45 angeordnet ist, wobei das weitere Anzeigeelement 45 durch das Sichtfenster 43 der Öffnerhülse 22 hindurch sichtbar sein kann, wenn sich die Öffnerhülse 22 in der Offenstellung 23 befindet. Wenn die Öffnerhülse 22 in die Geschlossenstellung 24 verdreht ist, kann das weitere Anzeigeelement 45 durch die Öffnerhülse 22 verdeckt sein.

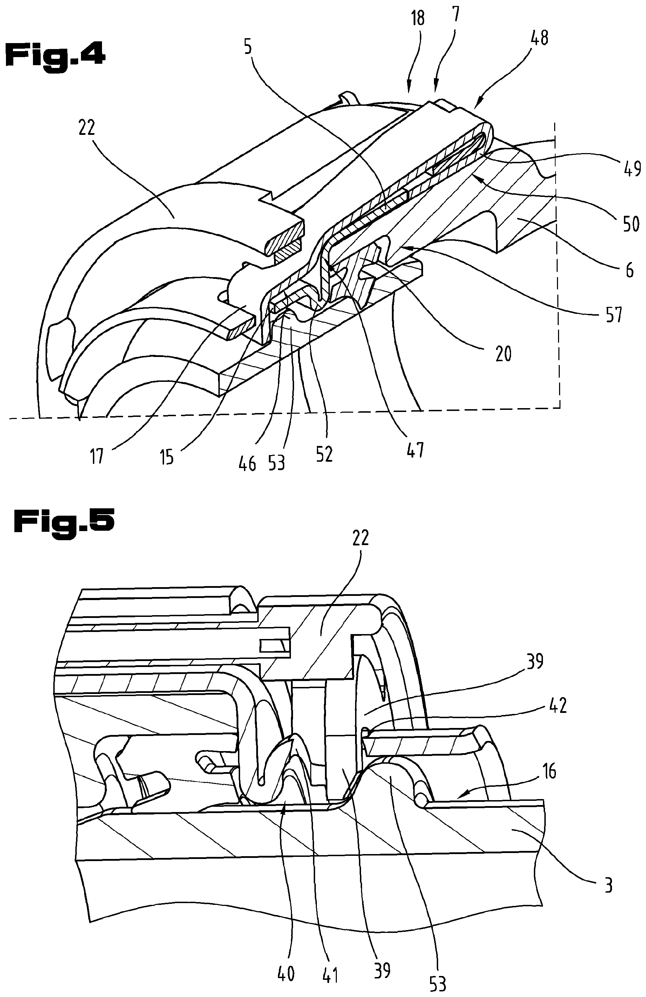

Fig. 4 zeigt eine Detailansicht des ersten Ausführungsbeispiels des Arretierungselementes 7 bzw. der Anbindung des Arretierungselementes 7 an die Steckerhülse 5, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie aus Fig. 4 ersichtlich, kann vorgesehen sein, dass das Arretierungselement 7 als Blechumformteil ausgebildet ist. Insbesondere kann vorgesehen sein, dass der erste Schenkel 17 zum zweiten Schenkel 18 in einem Schenkelwinkel 46 angeordnet ist.

Der erste Schenkel 17 und der zweite Schenkel 18 können hierbei durch einen Biegevorgang zueinander abgebogen werden. Weiters kann vorgesehen sein, dass am zweiten Schenkel 18 eine Abstufung 47 ausgebildet ist. Darüber hinaus kann vorgesehen sein, dass an einem ersten Längsende 48 des zweiten Schenkels 18 eine Rückschlaglasche 49 ausgebildet ist. Die Rückschlaglasche 49 kann derart ausgebildet sein, dass sie in einer Rückschlaglaschenaufnahme 50 der Steckerhülse 5 aufgenommen werden kann. Die Rückschlaglaschenaufnahme 50 kann hierbei durch einen Stanzprozess in die Steckerhülse 5 eingebracht werden. Insbesondere kann vorgesehen sein, dass die Rückschlaglaschenaufnahme 50 durch die Steckerhülse 5 an der Außenseite und durch die Steckerhülse 5 an der Innenseite begrenzt ist.

Wie aus Fig. 4 weiters ersichtlich, kann vorgesehen sein, dass im Anschlussstück 6 eine Dichtungselementaufnahme 51 ausgebildet ist, wobei die Dichtungselementaufnahme 51 zur Aufnahme des Dichtungselementes 20 dient. Wie aus Fig. 4 weiters ersichtlich, kann vorgesehen sein, dass in der Steckerhülse 5 eine radial nach innen stehende Umbördelung 52 ausgebildet ist, welche zur axialen Begrenzung der Dichtungselementaufnahme 51 dienen kann. Die Dichtungselementaufnahme 51 kann somit durch die Steckerhülse 5 an der einen Seite und durch einen Absatz im Anschlussstück 6 an der anderen Seite axial begrenzt sein.

Wie aus Fig. 4 ersichtlich, kann die Steckerhülse 5 soweit auf das Anschlussstück 6 aufgeschoben sein, bis eine Stirnseite des Anschlussstückes 6 an der Umbördelung 52 zum Anliegen kommt.

Fig. 5 zeigt eine perspektivische Schnittansicht des ersten Ausführungsbeispiels des Steckverbinders 2, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

In der Darstellung der Fig. 5 ist die Schnittführung so gewählt, dass das Detail der Rastarmdurchtrittsöffnung 40 ersichtlich ist.

Anhand einer Zusammenschau der Fig. 2 bis 5 wird ein Verfahren zum Herstellen einer Steckverbindung zwischen dem Steckverbinder 2 und dem Gegensteckverbinder 3 beschrieben. In einem Auslieferzustand kann hierbei der Steckverbinder 2 in einer Stellung, wie sie in Fig. 3 beschrieben und dargestellt ist, ausgeliefert werden. Hierbei kann sich die Öffnerhülse 22 in ihrer Offenstellung 23 befinden. Das Federelement 28 kann dabei derart auf die Öffnerhülse 22 wirken, dass diese in Richtung der Geschlossenstellung 24 gedrängt ist.

Ein Verdrehen der Öffnerhülse 22 in ihre Geschlossenstellung 24 wird jedoch dadurch verhindert, dass der Rastarm 39 in der axialen Abstufung 42 der Rastarmdurchtrittsöffnung 40 liegt. Durch den dadurch hergestellten Formschluss kann ein Verdrehen der Öffnerhülse 22 unterbunden werden. Der Rastarm 39 kann hierbei eine Elastizität und eine Vorspannung aufweisen, sodass der Rastarm 39 in Axialrichtung in die axialen Abstufung 42 gedrängt ist und sich ohne Fremdeinwirkung nicht aus der axialen Abstufung 42 bewegt. Durch die Anhebeelemente 32 können die Arretierungselemente 7 in ihre Freigabestellung 9 gedrängt sein.

In einem weiteren Verfahrensschritt kann nun der Gegensteckverbinder 3 axial in den Aufnahmeraum 14 des Steckverbinders 2 eingeschoben werden. Hierbei kann ein umlaufender Anlagewulst 53 des Gegensteckverbinders 3 am Rastarm 39 zum Anliegen kommen, wobei durch weitere axiale Verschiebung des Gegensteckverbinders 3 zum Steckverbinder 2 der Rastarm 39 mittels des Anlagewulstes 53 aus der axialen Abstufung 42 heraus in den Bereich des Schlitzes 41 verschoben werden kann. Dadurch kann die Verdrehsicherung der Öffnerhülse 22 aufgehoben werden. Der Rastarm 39 kann sich hierbei unter Ausnutzung dessen Elastizität elastisch verformen.

Dadurch dass sich der Rastarm 39 nun im Schlitz 41 befindet, kann sich getrieben durch die Federkraft des Federelementes 28 die Öffnerhülse 22 entgegen der ersten Umfangsrichtung 27 relativ zum Verbinderkörper 4 verdrehen und von der Offenstellung 23 in die Geschlossenstellung 24 gelangen. Hierbei können die Arretierungselemente 7 am Anhebeelement 32 abgleiten, sodass sich der erste Schenkel 17 des Arretierungselementes 7 in Radialrichtung durch die Durchtrittsöffnung 15 hindurch in den Aufnahmeraum 14 verschiebt und in die durch den Anlagewulst 53 ausgebildete Sicherungsform 16 eingreifen. Dadurch kann der Gegensteckverbinder 3 gegen ein Herausziehen aus dem Steckverbinder 2 gesichert werden.

Insbesondere kann, wie besonders gut aus Fig. 2 ersichtlich, in dieser Stellung das Arretierungselement 7 mittels des Sicherungselementes 36 gegen ein radiales Anheben gesichert werden.

Gleichzeitig kann in dieser Stellung das Anzeigeelement 44 von außen sichtbar werden, sodass ein korrektes Stecken bzw. Verriegeln des Gegensteckverbinders 3 im Steckverbinder 2 ersichtlich gemacht werden kann. Insbesondere kann hierbei vorgesehen sein, dass das Anzeigeelement 44 in Form eines maschinenlesbaren Codes, beispielsweise eines QR-Codes, ausgebildet ist, welcher nun gescannt werden kann, um für die Qualitätssicherung das erfolgreiche Verbinden des Gegensteckverbinders 3 mit dem Steckverbinder 2 dokumentieren zu können.

Um den Gegensteckverbinder 3 aus dem Steckverbinder 2 wieder entfernen zu können, kann die Steckverbindung wie folgt gelöst werden. Durch mechanische Betätigung und eine externe Krafteinwirkung, beispielweise durch Verdrehung mittels einer Hand eines Menschen, kann die Öffnerhülse 22 aus der Geschlossenstellung 24 in die Offenstellung 23 in der ersten Umfangsrichtung 27 verdreht werden. Hierbei können die Anhebeelemente 32 an den Arretierungselementen 7 zur Anlage kommen und diese in radialer Richtung nach außen biegen, sodass der erste Schenkel 17 der Arretierungselemente 7 außer Eingriff mit der Sicherungsform 16 gebracht werden kann. Durch die Verdrehung der Öffnerhülse 22 kann gleichzeitig der Rastarm 39 so weit im Schlitz 41 verschoben werden, bis er bedingt durch die elastische Vorspannung in die axiale Abstufung 42 einfällt, sobald ein entsprechender Verdrehwinkel erreicht ist. Der Rastarm 39 kann sich hierbei zur Einsteckseite 19 des Steckverbinders 2 hin verschieben, um in der axialen Abstufung 42 aufgenommen zu sein. Durch diese Verriegelung des Rastarmes 39 kann die Öffnerhülse 22 in der Offenstellung 23 gesichert werden.

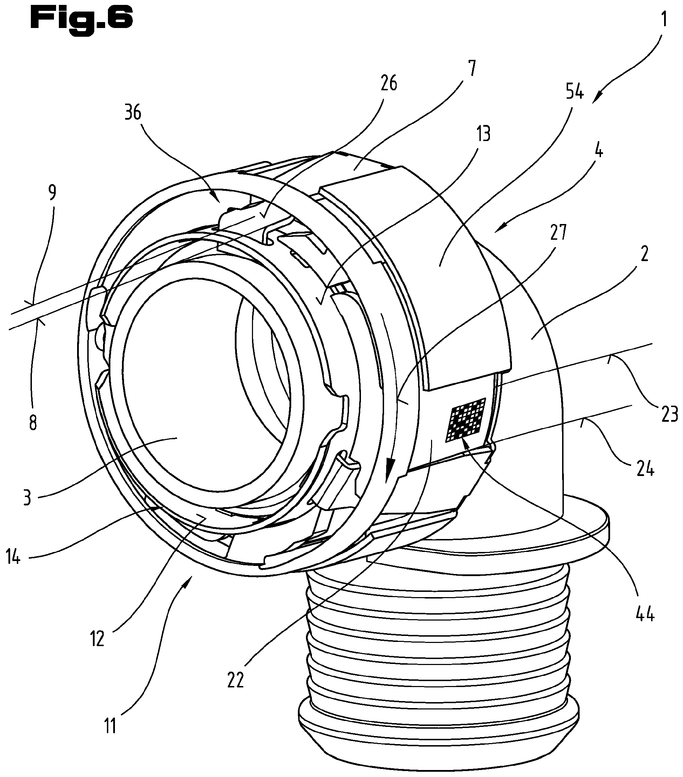

Fig. 6 zeigt ein weiteres Ausführungsbeispiel der Steckerbaugruppe 1, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Wie aus Fig. 6 ersichtlich, kann vorgesehen sein, dass außerhalb der Öffnerhülse 22 ein Anzeigehülsenabschnitt 54 ausgebildet ist, durch welchen die Öffnerhülse 22 teilweise verdeckt ist. Der Anzeigehülsenabschnitt 54 kann hierbei mit der Steckerhülse 5 gekoppelt sein bzw. direkt als Blechumformabschnitt an der Steckerhülse 5 ausgebildet sein. Bei einem derartigen Ausführungsbeispiel kann an einer Außenmantelfläche der Öffnerhülse 22 das Anzeigeelement 44 angeordnet sein, wobei entsprechend den schon beschriebenen Ausführungen das Anzeigeelement 44 je nach Stellung der Öffnerhülse 22 durch den Anzeigehülsenabschnitt 54 verdeckt oder von außen sichtbar sein kann.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Steckerbaugruppe | 31 | Kulissenführung |
| 2 | Steckverbinder | 32 | Anhebeelement |
| 3 | Gegensteckverbinder | 33 | Anhebefläche |
| 4 | Verbinderkörper | 34 | Winkel |
| 5 | Steckerhülse | 35 | Tangente |
| 6 | Anschlussstück | 36 | Sicherungselement |
| 7 | Arretierungselement | 37 | Sicherungsfläche |
| 8 | Arretierstellung | 38 | Verdrehsicherung |
| 9 | Freigabestellung | 39 | Rastarm |
| 10 | Mittelachse des Steckverbinders | 40 | Rastarmdurchtrittsöffnung |
| 11 | erster Mantelabschnitt | 41 | Schlitz |
| 12 | innenliegende Mantelfläche | 42 | axiale Abstufung |
| 13 | außenliegende Mantelfläche | 43 | Sichtfenster |
| 14 | Aufnahmeraum | 44 | Anzeigeelement |
| 15 | Durchtrittsöffnung | 45 | weiteres Anzeigeelement |
| 16 | Sicherungsform | 46 | Schenkelwinkel |
| 17 | erster Schenkel | 47 | Abstufung |
| 18 | zweiter Schenkel | 48 | erstes Längsende zweiter Schenkel |
| 19 | Einsteckseite | 49 | Rückschlaglasche |
| 20 | Dichtungselement | 50 | Rückschlaglaschenaufnahme |
| 21 | Einsteckabschnitt | 51 | Dichtungselementaufnahme |
| 22 | Öffnerhülse | 52 | Umbördelung |
| 23 | Offenstellung | 53 | Anlagewulst |
| 24 | Geschlossenstellung | 54 | Anzeigehülsenabschnitt |
| 25 | Innenseite zweiter Schenkel | | |
| 26 | Außenseite zweiter Schenkel | | |
| 27 | erste Umfangsrichtung | | |
| 28 | Federelement | | |
| 29 | erster Federelementschenkel | | |
| 30 | zweiter Federelementschenkel | | |

## Patentansprüche

1. Steckverbinder (2) zum Verbinden von Leitungen für flüssige oder gasförmige Medien, umfassend
- einen Verbinderkörper (4), welcher zumindest einen ersten Mantelabschnitt (11) aufweist, wobei der erste Mantelabschnitt (11) eine Mittelachse (10) umgibt und einen Aufnahmeraum (14) zur Aufnahme eines Teils eines Gegensteckverbinders (3) bildet, wobei der Aufnahmeraum (14) zur Aufnahme eines Teils eines Gegensteckverbinders (3) an einer Einsteckseite (19) offen ist, wobei im ersten Mantelabschnitt (11) zumindest eine Durchtrittsöffnung (15) ausgebildet ist;
- ein Arretierungselement (7), welches zum Sichern des Steckverbinders (2) relativ zum Gegensteckverbinder (3) vorgesehen ist,
wobei
das Arretierungselement (7) einen ersten Schenkel (17) und einen damit gekoppelten zweiten Schenkel (18) aufweist, wobei der zweite Schenkel (18) des Arretierungselementes (7) außerhalb des ersten Mantelabschnittes (11) angeordnet ist und mit dem Verbinderkörper (4) gekoppelt ist, wobei sich der zweite Schenkel (18) in einer Längsrichtung parallel zur Mittelachse (10) erstreckt, wobei der erste Schenkel (17) im Bereich der Durchtrittsöffnung (15) angeordnet ist und dazu ausgebildet ist,
in einer Arretierstellung (8) durch die Durchtrittsöffnung (15) radial in den Aufnahmeraum (14) einzuragen, um eine formschlüssige Verbindung mit dem Gegensteckverbinder (3) herstellen zu können und
in einer Freigabestellung (9) radial aus dem Aufnahmeraum (14) nach außen so weit zurückgezogen zu sein, um den Gegensteckverbinder (3) zum Herausziehen aus dem Aufnahmeraum (14) freizugeben, **dadurch gekennzeichnet, dass**
die Steckerhülse (5) als Blechumformteil ausgebildet ist und dass das Arretierungselement (7) als Blechumformteil ausgebildet ist, wobei in der Steckerhülse (5) eine Arretierungselementaufnahme ausgebildet ist und der zweite Schenkel (18) des Arretierungselementes (7) formschlüssig und starr in der Arretierungselementaufnahme aufgenommen ist.

2. Steckverbinder (2) nach Anspruch 1, **dadurch gekennzeichnet, dass** mehrere der Arretierungselemente (7) über den Umfang verteilt am Verbinderkörper (4) angeordnet sind, wobei für jedes der Arretierungselemente (7) eine Durchtrittsöffnung (15) ausgebildet ist.

3. Steckverbinder (2) nach Anspruch 1 oder 2, **dadurch gekennzeichnet, dass** eine Öffnerhülse (22) ausgebildet ist, wobei die Öffnerhülse (22) zwischen einer Offenstellung (23) und einer Geschlossenstellung (24) verdrehbar am Verbinderkörper (4) angeordnet ist und wobei in der Offenstellung (23) der Öffnerhülse (22) der erste Schenkel (17) des Arretierungselementes (7) in die Freigabestellung (9) gedrängt ist und in dieser gehalten wird und wobei in der Geschlossenstellung (24) der Öffnerhülse (22) der erste Schenkel (17) des Arretierungselementes (7) seine Arretierstellung (8) einnimmt.

4. Steckverbinder (2) nach Anspruch 3, **dadurch gekennzeichnet, dass** die Öffnerhülse (22) eine Kulissenführung (31) aufweist, mittels welcher das Arretierungselement (7) bei Verdrehung der Öffnerhülse (22) in Radialrichtung verschiebbar ist, wobei der zweite Schenkel (18) des Arretierungselementes (7) in Axialrichtung durch die Kulissenführung (31) hindurchgeführt ist.

5. Steckverbinder (2) nach Anspruch 4, **dadurch gekennzeichnet, dass** in der Kulissenführung (31) ein Anhebeelement (32) mit einer Anhebefläche (33) ausgebildet ist, wobei die Anhebefläche (33) in Richtung einer ersten Umfangsrichtung (27) einen sich vergrößernden Abstand zur Mittelachse (10) aufweist und wobei in der Offenstellung (23) der Öffnerhülse (22) eine Innenseite (25) des zweiten Schenkels (18) des Arretierungselementes (7) an der Anhebefläche (33) anliegt.

6. Steckverbinder (2) nach Anspruch 4 oder 5, **dadurch gekennzeichnet, dass** in der Kulissenführung (31) ein Sicherungselement (36) mit einer Sicherungsfläche (37) ausgebildet ist, wobei die Sicherungsfläche (37) in Richtung der ersten Umfangsrichtung (27) einen sich verringernden Abstand zur Mittelachse (10) aufweist und wobei in der Geschlossenstellung (24) der Öffnerhülse (22) eine Außenseite (26) des zweiten Schenkels (18) des Arretierungselementes (7) von der Sicherungsfläche (37) überdeckt ist.

7. Steckverbinder (2) nach einem der Ansprüche 3 bis 6, **dadurch gekennzeichnet, dass** ein Federelement (28) ausgebildet ist, welches auf die Öffnerhülse (22) wirkt, wobei die Öffnerhülse (22) mittels des Federelementes (28) in die Geschlossenstellung (24) gedrängt ist.

8. Steckverbinder (2) nach einem der Ansprüche 3 bis 7, **dadurch gekennzeichnet, dass** an der Öffnerhülse (22) eine Verdrehsicherung (38) ausgebildet ist, wobei mittels der Verdrehsicherung (38) die Öffnerhülse (22) in der Offenstellung (23) gehalten werden kann.

9. Steckverbinder (2) nach Anspruch 8, **dadurch gekennzeichnet, dass** die Verdrehsicherung (38) einen Rastarm (39) aufweist, der in einer Rastarmdurchtrittsöffnung (40) des ersten Mantelabschnittes (11) radial in den Aufnahmeraum (14) einragt, wobei die Rastarmdurchtrittsöffnung (40) einen sich in Umfangsrichtung erstreckenden Schlitz (41) und daran anschließend eine sich zur Einsteckseite (19) hin erstreckende axiale Abstufung (42) aufweist, wobei der Rastarm (39) in der Offenstellung (23) der Öffnerhülse (22) in der axialen Abstufung (42) aufgenommen ist und wobei der Rastarm (39) durch einen eingesteckten Gegensteckverbinder (3) aus der axialen Abstufung (42) in den Schlitz (41) verschiebbar ist.

10. Steckverbinder (2) nach einem der Ansprüche 3 bis 9, **dadurch gekennzeichnet, dass** in der Öffnerhülse (22) ein Sichtfenster (43) angeordnet ist und dass am Verbinderkörper (4) ein Anzeigeelement (44) angeordnet ist, wobei das Anzeigeelement (44) durch das Sichtfenster (43) hindurch sichtbar ist, wenn sich die Öffnerhülse (22) in der Geschlossenstellung (24) befindet und das Anzeigeelement (44) durch die Öffnerhülse (22) verdeckt ist, wenn sich die Öffnerhülse (22) in der Offenstellung (23) befindet.

11. Steckverbinder (2) nach einem der vorhergehenden Ansprüche, **dadurch gekennzeichnet, dass** der Verbinderkörper (4) eine Steckerhülse (5) und ein Anschlussstück (6) umfasst, welche Starr miteinander gekoppelt sind, wobei der erste Mantelabschnitt (11) und der Aufnahmeraum (14) in der Steckerhülse (5) ausgebildet sind.

12. Steckverbinder (2) nach einem der vorhergehenden Ansprüche, **dadurch gekennzeichnet, dass** das Arretierungselement (7) als Blechumformteil ausgebildet ist, wobei der erste Schenkel (17) in einem Schenkelwinkel (46) zwischen 87° und 93° zum zweiten Schenkel (18) angeordnet ist.

13. Steckerbaugruppe (1) umfassend einen Steckverbinder (2) und einen Gegensteckverbinder (3), **dadurch gekennzeichnet, dass** der Steckverbinder (2) nach einem der vorhergehenden Ansprüche ausgebildet ist und dass der Gegensteckverbinder (3) ein Formelement zum Herstellen einer formschlüssigen Verbindung mit dem ersten Schenkel (17) des Arretierungselementes (7) aufweist.

14. Verfahren zum Herstellen einer Steckverbindung zwischen einem Steckverbinder (2) zum Verbinden von Leitungen für flüssige oder gasförmige Medien und einem Gegensteckverbinder (3), umfassend die Verfahrensschritte:
- bereitstellen des Steckverbinders (2) mit einem Verbinderkörper (4), welcher zumindest einen ersten Mantelabschnitt (11) aufweist, wobei der erste Mantelabschnitt (11) eine Mittelachse (10) umgibt und einen Aufnahmeraum (14) zur Aufnahme eines Teils eines Gegensteckverbinders (3) bildet, wobei der Aufnahmeraum (14) zur Aufnahme eines Teils eines Gegensteckverbinders (3) an einer Einsteckseite (19) offen ist, wobei im ersten Mantelabschnitt (11) zumindest eine Durchtrittsöffnung (15) ausgebildet ist und einem Arretierungselement (7), welches zum Sichern des Steckverbinders (2) relativ zum Gegensteckverbinder (3) vorgesehen ist;
- bereitstellen des Gegensteckverbinders (3);
- einstecken des Gegensteckverbinders (3) in den Aufnahmeraum (14) des Steckverbinders (2);
- sichern des Gegensteckverbinders (3) im Aufnahmeraum (14) des Steckverbinders (2) mittels des Arretierungselementes (7),
wobei
das Arretierungselement (7) einen ersten Schenkel (17) und einen damit gekoppelten zweiten Schenkel (18) aufweist, wobei der zweite Schenkel (18) des Arretierungselementes (7) außerhalb des ersten Mantelabschnittes (11) angeordnet ist und mit dem Verbinderkörper (4) gekoppelt ist, wobei sich der zweite Schenkel (18) in einer Längsrichtung parallel zur Mittelachse (10) erstreckt, wobei der erste Schenkel (17) im Bereich der Durchtrittsöffnung (15) angeordnet ist und dazu ausgebildet ist,
in einer Arretierstellung (8) durch die Durchtrittsöffnung (15) radial in den Aufnahmeraum (14) einzuragen, um eine formschlüssige Verbindung mit dem Gegensteckverbinder (3) herstellen zu können und
in einer Freigabestellung (9) radial aus dem Aufnahmeraum (14) nach außen so weit zurückgezogen zu sein, um den Gegensteckverbinder (3) zum Herausziehen aus dem Aufnahmeraum (14) freizugeben,
wobei zum Sichern des Gegensteckverbinders (3), das Arretierungselement (7) von der Freigabestellung (9) in die Arretierstellung (8) überführt wird,
**dadurch gekennzeichnet, dass** die Steckerhülse (5) als Blechumformteil ausgebildet ist und dass das Arretierungselement (7) als Blechumformteil ausgebildet ist, wobei in der Steckerhülse (5) eine Arretierungselementaufnahme ausgebildet ist und der zweite Schenkel (18) des Arretierungselementes (7) formschlüssig und starr in der Arretierungselementaufnahme aufgenommen ist.

15. Verfahren nach Anspruch 14, **dadurch gekennzeichnet, dass** das Arretierungselement (7) mittels einer Öffnerhülse (22) in der Freigabestellung (9) gehalten wird, wenn sich die Öffnerhülse (22) in der Offenstellung (23) befindet, wobei die Öffnerhülse (22) mittels einer Verdrehsicherung (38) in der Offenstellung (23) gehalten wird, wobei beim Einstecken des Gegensteckverbinders (3) in den Aufnahmeraum (14), die Verdrehsicherung (38) durch den Gegensteckverbinder (3) entriegelt wird und dadurch die Öffnerhülse (22) unter der Kraft eines Federelementes (28) in die Geschlossenstellung (24) überführt wird, wodurch das Arretierungselement (7) in die Arretierstellung (8) überführt wird.

16. Verfahren nach Anspruch 15, **dadurch gekennzeichnet, dass** zum Entsichern des Gegensteckverbinders (3) die Öffnerhülse (22) manuell entgegen der Kraft des Federelementes (28) von der Geschlossenstellung (24) in die Offenstellung (23) verdreht wird, wobei das Arretierungselement (7) durch eine Kulissenführung (31) von der Arretierstellung (8) in die Freigabestellung (9) überführt wird.

## Claims

1. A plug connector (2) for connecting pipes for liquid or gaseous media, comprising
- a connector body (4) which has at least one first casing section (11), wherein the first casing section (11) surrounds a central axis (10) and forms a receiving space (14) for receiving a part of a mating plug connector (3), wherein the receiving space (14) is open on an insertion side (19) for receiving a part of a mating plug connector (3), wherein at least one passage (15) is formed in the first casing section (11);
- a locking element (7), which is provided for securing the plug connector (2) relative to the mating plug connector (3),
wherein
the locking element (7) has a first leg (17) and a second leg (18) coupled thereto, wherein the second leg (18) of the locking element (7) is arranged outside the first casing section (11) and is coupled to the connector body (4), wherein the second leg (18) extends in a longitudinal direction parallel to the central axis (10), wherein the first leg (17) is arranged in the region of the passage (15) and is configured,
in a locking position (8), to project radially through the passage (15) into the receiving space (14) in order to be able to establish a positive connection with the mating plug connector (3), and,
in a release position (9), to be retracted radially outwards from the receiving space (14) sufficiently far to release the mating plug connector (3) for withdrawal from the receiving space (14), **characterized in that**
the plug sleeve (5) is configured as a sheet metal forming part and that the locking element (7) is configured as a sheet metal forming part, wherein a locking element receptacle is formed in the plug sleeve (5) and the second leg (18) of the locking element (7) is positively and rigidly received in the locking element receptacle.

2. The plug connector (2) according to claim 1, **characterized in that** a plurality of the locking elements (7) are arranged distributed over the circumference on the connector body (4), wherein a passage (15) is formed for each of the locking elements (7).

3. The plug connector (2) according to claim 1 or 2, **characterized in that** an opener sleeve (22) is formed, wherein the opener sleeve (22) is arranged on the connector body (4) so as to be rotatable between an open position (23) and a closed position (24) and wherein, in the open position (23) of the opener sleeve (22), the first leg (17) of the locking element (7) is urged into the release position (9) and is held therein, and wherein in the closed position (24) of the opener sleeve (22) the first leg (17) of the locking element (7) assumes its locking position (8).

4. The plug connector (2) according to claim 3, **characterized in that** the opener sleeve (22) has a guide track (31) by means of which the locking element (7) can be displaced in the radial direction when the opener sleeve (22) is rotated, wherein the second leg (18) of the locking element (7) is guided through the guide track (31) in the axial direction.

5. The plug connector (2) according to claim 4, **characterized in that** a lifting element (32) with a lifting surface (33) is formed in the guide track (31), wherein the lifting surface (33) has an increasing distance from the central axis (10) in the direction of a first circumferential direction (27) and wherein, in the open position (23) of the opener sleeve (22), an inner side (25) of the second leg (18) of the locking element (7) is in contact with the lifting surface (33).

6. The plug connector (2) according to claim 4 or 5, **characterized in that** a securing element (36) with a securing surface (37) is formed in the guide track (31), wherein the securing surface (37) has a decreasing distance from the central axis (10) in the direction of the first circumferential direction (27), and wherein, in the closed position (24) of the opener sleeve (22), an outer side (26) of the second leg (18) of the locking element (7) is covered by the securing surface (37).

7. The plug connector (2) according to one of claims 3 to 6, **characterized in that** a spring element (28) is formed which acts on the opener sleeve (22), wherein the opener sleeve (22) is urged into the closed position (24) by means of the spring element (28).

8. The plug connector (2) according to one of claims 3 to 7, **characterized in that** an anti-rotation device (38) is formed on the opener sleeve (22), wherein the opener sleeve (22) can be held in the open position (23) by means of the anti-rotation device (38).

9. The plug connector (2) according to claim 8, **characterized in that** the anti-rotation device (38) has a latching arm (39) which projects radially into the receiving space (14) in a latching arm passage (40) of the first casing section (11), wherein the latching arm passage (40) has a slot (41) extending in the circumferential direction and, adjacent thereto, an axial stepping (42) extending towards the insertion side (19), wherein the latching arm (39) is received in the axial stepping (42) in the open position (23) of the opener sleeve (22) and wherein the latching arm (39) is displaceable out of the axial stepping (42) into the slot (41) by an inserted mating plug connector (3).

10. The plug connector (2) according to one of claims 3 to 9, **characterized in that** a viewing window (43) is arranged in the opener sleeve (22) and that an indicator element (44) is arranged on the connector body (4), wherein the indicator element (44) is visible through the viewing window (43) when the opener sleeve (22) is in the closed position (24) and the indicator element (44) is concealed by the opener sleeve (22) when the opener sleeve (22) is in the open position (23).

11. The plug connector (2) according to one of the preceding claims, **characterized in that** the connector body (4) comprises a plug sleeve (5) and a connection piece (6), which are rigidly coupled to one another, wherein the first casing section (11) and the receiving space (14) are formed in the plug sleeve (5).

12. The plug connector (2) according to one of the preceding claims, **characterized in that** the locking element (7) is configured as a sheet metal forming part, wherein the first leg (17) is arranged at a leg angle (46) of between 87° and 93° to the second leg (18).

13. A plug assembly (1) comprising a plug connector (2) and a mating plug connector (3), **characterized in that** the plug connector (2) is configured according to one of the preceding claims and that the mating plug connector (3) has a shaping element for producing a positive connection with the first leg (17) of the locking element (7).

14. A method for establishing a plug connection between a plug connector (2) for connecting pipes for liquid or gaseous media and a mating plug connector (3), comprising the method steps:
- providing the plug connector (2) having a connector body (4) which has at least a first casing section (11), wherein the first casing section (11) surrounds a central axis (10) and forms a receiving space (14) for receiving a part of a mating plug connector (3), wherein the receiving space (14) for receiving a part of a mating plug connector (3) is open on an insertion side (19), wherein at least one passage (15) is formed in the first casing section (11) and a locking element (7) is provided for securing the plug connector (2) relative to the mating plug connector (3);
- providing the mating plug connector (3);
- inserting the mating plug connector (3) into the receiving space (14) of the plug connector (2);
- securing the mating plug connector (3) in the receiving space (14) of the plug connector (2) by means of the locking element (7),
wherein
the locking element (7) has a first leg (17) and a second leg (18) coupled thereto, wherein the second leg (18) of the locking element (7) is arranged outside the first casing section (11) and is coupled to the connector body (4), wherein the second leg (18) extends in a longitudinal direction parallel to the central axis (10), wherein the first leg (17) is arranged in the region of the passage (15) and is configured,
in a locking position (8), to project radially through the passage (15) into the receiving space (14) in order to be able to establish a positive connection with the mating plug connector (3), and
in a release position (9), to be retracted radially outwards from the receiving space (14) sufficiently far to release the mating plug connector (3) for withdrawal from the receiving space (14),
wherein the locking element (7) is transferred from the release position (9) to the locking position (8) in order to secure the mating plug connector (3),
**characterized in that** the plug sleeve (5) is configured as a sheet metal forming part and that the locking element (7) is configured as a sheet metal forming part, wherein a locking element receptacle is formed in the plug sleeve (5) and the second leg (18) of the locking element (7) is positively and rigidly received in the locking element receptacle.

15. The method according to claim 14, **characterized in that** the locking element (7) is held in the release position (9) by means of an opener sleeve (22) when the opener sleeve (22) is in the open position (23), wherein the opener sleeve (22) is held in the open position (23) by means of an anti-rotation device (38), wherein, when the mating plug connector (3) is inserted into the receiving space (14), the anti-rotation device (38) is unlocked by the mating plug connector (3) and the opener sleeve (22) is thereby transferred into the closed position (24) under the force of a spring element (28), whereby the locking element (7) is transferred into the locking position (8).

16. The method according to claim 15, **characterized in that**, to release the mating plug connector (3), the opener sleeve (22) is manually rotated against the force of the spring element (28) from the closed position (24) into the open position (23), wherein the locking element (7) is transferred from the locking position (8) into the release position (9) by a guide track (31).

## Revendications

1. Connecteur enfichable (2) pour raccorder des conduites de fluides liquides ou gazeux comprenant
- un corps de connecteur (4) qui présente au moins une première partie d'enveloppe (11) la première partie d'enveloppe (11) entourant un axe central (10) et formant un espace de réception (14) destiné à recevoir une partie d'un connecteur enfichable correspondant (3), l'espace de réception (14) destiné à recevoir une partie d'un connecteur enfichable correspondant (3) étant ouvert sur un côté d'enfichage (19), au moins une ouverture de passage (15) étant formée dans la première partie d'enveloppe (11) ;
- un élément de blocage (7) qui est prévu pour fixer le connecteur enfichable (2) par rapport au connecteur enfichable correspondant (3),
l'élément de blocage (7) présentant une première branche (17) et une deuxième branche (18) couplée à celle-ci, la deuxième branche (18) de l'élément de blocage (7) étant agencée à l'extérieur de la première partie d'enveloppe (11) et étant couplée au corps de connecteur (4), la deuxième branche (18) s'étendant dans une direction longitudinale parallèle à l'axe central (10), la première branche (17) étant agencée dans la zone de l'ouverture de passage (15) et étant conçue
pour pénétrer radialement dans l'espace de réception (14) à travers l'ouverture de passage (15) dans une position de blocage (8) afin de pouvoir former une liaison par complémentarité de forme avec le connecteur enfichable correspondant (3) et
pour être retirée radialement vers l'extérieur de l'espace de réception (14) dans une position de libération (9), suffisamment loin pour libérer le connecteur enfichable correspondant (3) afin de le retirer de l'espace de réception (14), **caractérisé en ce que** la douille de connecteur (5) est conçue comme une pièce formée en tôle et que l'élément de blocage (7) est conçu comme une pièce formée en tôle, un logement pour l'élément de blocage étant formé dans la douille de connecteur (5) et la deuxième branche (18) de l'élément de blocage (7) étant logée de manière rigide et par complémentarité de forme dans le logement pour l'élément de blocage.

2. Connecteur enfichable (2) selon la revendication 1, **caractérisé en ce que** plusieurs des éléments de blocage (7) sont répartis sur la circonférence du corps de connecteur (4), une ouverture de passage (15) étant formée pour chacun des éléments de blocage (7).

3. Connecteur enfichable (2) selon la revendication 1 ou 2, **caractérisé en ce qu'**une douille d'ouverture (22) est formée, la douille d'ouverture (22) étant agencée de manière rotative sur le corps de connecteur (4) entre une position ouverte (23) et une position fermée (24) et, dans la position ouverte (23) de la douille d'ouverture (22), la première branche (17) de l'élément de blocage (7) étant poussée dans la position de libération (9) et maintenue dans celle-ci et, dans la position fermée (24) de la douille d'ouverture (22), la première branche (17) de l'élément de blocage (7) prenant sa position de blocage (8).

4. Connecteur enfichable (2) selon la revendication 3, **caractérisé en ce que** la douille d'ouverture (22) comporte un guide à coulisse (31) au moyen duquel l'élément de blocage (7) peut être déplacé dans le sens radial lors de la rotation de la douille d'ouverture (22), la deuxième branche (18) de l'élément de blocage (7) étant guidée dans le sens axial par le guide à coulisse (31).

5. Connecteur enfichable (2) selon la revendication 4, **caractérisé en ce qu'**un élément de levage (32) avec une surface de levage (33) est formé dans le guide à coulisse (31), la surface de levage (33) présentant, dans une première direction circonférentielle (27), une distance croissante par rapport à l'axe central (10) et, dans la position ouverte (23) de la douille d'ouverture (22), une face intérieure (25) de la deuxième branche (18) de l'élément de blocage (7) reposant contre la surface de levage (33).

6. Connecteur enfichable (2) selon la revendication 4 ou 5, **caractérisé en ce qu'**un élément de sécurité (36) est formé dans le guide à coulisse (31) avec une surface de sécurité (37), la surface de sécurité (37) présentant, dans le sens de la première direction circonférentielle (27), une distance décroissante par rapport à l'axe central (10) et, dans la position fermée (24) de la douille d'ouverture (22), une face extérieure (26) de la deuxième branche (18) de l'élément de blocage (7) étant recouverte par la surface de sécurité (37).

7. Connecteur enfichable (2) selon l'une des revendications 3 à 6, **caractérisé en ce qu'**est formé un élément à ressort (28) qui agit sur la douille d'ouverture (22), la douille d'ouverture (22) étant poussée dans la position fermée (24) au moyen de l'élément à ressort (28).

8. Connecteur enfichable (2) selon l'une des revendications 3 à 7, **caractérisé en ce qu'**un dispositif anti-rotation (38) est formé sur la douille d'ouverture (22), la douille d'ouverture (22) pouvant être maintenue dans la position ouverte (23) au moyen du dispositif anti-rotation (38).

9. Connecteur enfichable (2) selon la revendication 8, **caractérisé en ce que** le dispositif anti-rotation (38) présente un bras d'encliquetage (39) qui s'engage radialement dans l'espace de réception (14) à travers une ouverture de passage (40) pour le bras d'encliquetage dans la première partie d'enveloppe (11), l'ouverture de passage (40) pour le bras d'encliquetage présentant une fente (41) s'étendant dans le sens circonférentiel et, à la suite de celle-ci, un gradin axial (42) s'étendant vers le côté d'enfichage (19), le bras d'encliquetage (39) étant logé dans le gradin axial (42) lorsque la douille d'ouverture (22) est en position ouverte (23), et le bras d'encliquetage (39) pouvant être déplacé du gradin axial (42) dans la fente (41) par un connecteur enfichable correspondant (3).

10. Connecteur enfichable (2) selon l'une des revendications 3 à 9, **caractérisé en ce qu'**une fenêtre de visualisation (43) est agencée dans la douille d'ouverture (22) et **en ce qu'**un élément d'affichage (44) est agencé sur le corps de connecteur (4), l'élément d'affichage (44) étant visible à travers la fenêtre de visualisation (43) lorsque la douille d'ouverture (22) se trouve en position fermée (24) et que l'élément d'affichage (44) est recouvert par la douille d'ouverture (22) lorsque la douille d'ouverture (22) se trouve en position ouverte (23).

11. Connecteur enfichable (2) selon l'une des revendications précédentes, **caractérisé en ce que** le corps de connecteur (4) comprend une douille de connecteur (5) et un raccord (6) qui sont couplés de manière rigide l'un à l'autre, la première partie d'enveloppe (11) et l'espace de réception (14) étant formés dans la douille de connecteur (5).

12. Connecteur enfichable (2) selon l'une des revendications précédentes, **caractérisé en ce que** l'élément de blocage (7) est réalisé sous la forme d'une pièce formée en tôle, la première branche (17) étant disposée selon un angle de branche (46) compris entre 87° et 93° par rapport à la deuxième branche (18).

13. Ensemble de connecteurs (1) comprenant un connecteur enfichable (2) et un connecteur enfichable correspondant (3), **caractérisé en ce que** le connecteur enfichable (2) est conçu selon l'une des revendications précédentes et **en ce que** le connecteur enfichable correspondant (3) présente un élément moulé pour établir une liaison par complémentarité de forme avec la première branche (17) de l'élément de blocage (7).

14. Procédé pour réaliser une connexion enfichable entre un connecteur enfichable (2) destiné à raccorder des conduites pour des fluides liquides ou gazeux et un connecteur enfichable correspondant (3), comprenant les étapes suivantes :
- mettre à disposition le connecteur enfichable (2) avec un corps de connecteur (4) qui présente au moins une première partie d'enveloppe (11), la première partie d'enveloppe (11) entourant un axe central (10) et formant un espace de réception (14) destiné à recevoir une partie d'un connecteur enfichable correspondant (3), l'espace de réception (14) destiné à recevoir une partie d'un connecteur enfichable correspondant (3) sur un côté d'enfichage (19) étant ouvert, au moins une ouverture de passage (15) étant formée dans la première partie d'enveloppe (11) et un élément de blocage (7) étant prévu pour bloquer le connecteur enfichable (2) par rapport au connecteur enfichable correspondant (3) ;
- mettre à disposition le connecteur enfichable correspondant (3) ;
- enficher le connecteur enfichable correspondant (3) dans l'espace de réception (14) du connecteur enfichable (2) ;
- fixer le connecteur enfichable correspondant (3) dans l'espace de réception (14) du connecteur enfichable (2) à l'aide de l'élément de blocage (7),
l'élément de blocage (7) présentant une première branche (17) et une deuxième branche (18) couplée à celle-ci, la deuxième branche (18) de l'élément de blocage (7) étant agencée à l'extérieur de la première partie d'enveloppe (11) et étant couplée au corps de connecteur (4), la deuxième branche (18) s'étendant dans une direction longitudinale parallèle à l'axe central (10), la première branche (17) étant agencée dans la zone de l'ouverture de passage (15) et étant conçue
pour pénétrer radialement dans l'espace de réception (14) à travers l'ouverture de passage (15) dans une position de blocage (8) afin de pouvoir établir une liaison par complémentarité de forme avec le connecteur enfichable correspondant (3) et,
dans une position de libération (9), pour être retirée radialement vers l'extérieur de l'espace de réception (14) sur une distance suffisante pour libérer le connecteur enfichable correspondant (3) afin qu'il puisse être retiré de l'espace de réception (14), l'élément de blocage (7) étant transféré de la position de libération (9) à la position de blocage (8) afin de bloquer le connecteur enfichable correspondant (3),
**caractérisé en ce que** la douille de connecteur (5) est conçue comme une pièce formée en tôle et **en ce que** l'élément de blocage (7) est conçu comme une pièce formée en tôle, un logement d'élément de blocage étant formé dans la douille de connecteur (5) un logement d'élément de blocage étant formé et la deuxième branche (18) de l'élément de blocage (7) étant logée de manière rigide et par complémentarité de forme dans le logement d'élément de blocage.

15. Procédé selon la revendication 14, **caractérisé en ce que** l'élément de blocage (7) est maintenu dans la position de libération (9) au moyen d'une douille d'ouverture (22) lorsque la douille d'ouverture (22) se trouve en position ouverte (23), la douille d'ouverture (22) étant maintenue en position ouverte (23) au moyen d'un dispositif anti-rotation (38), le dispositif anti-rotation (38) étant débloqué par le connecteur enfichable correspondant (3) lors de l'insertion du connecteur enfichable correspondant (3) dans l'espace de réception (14) et la douille d'ouverture (22) étant ainsi amenée en position fermée (24) sous l'effet de la force d'un élément à ressort (28), ce qui amène l'élément de blocage (7) en position de blocage (8).

16. Procédé selon la revendication 15, **caractérisé en ce que**, pour débloquer le connecteur enfichable correspondant (3), la douille d'ouverture (22) est tournée manuellement à l'encontre de la force de l'élément à ressort (28) de la position fermée (24) à la position ouverte (23), l'élément de blocage (7) étant transféré par un guide à coulisse (31) de la position de blocage (8) à la position de libération (9).
